# EUROPÄISCHE PATENTSCHRIFT

(11) **EP 0 801 104 B1**
(45) Veröffentlichungstag und Bekanntmachung des Hinweises auf die Patenterteilung: **29.11.2000**
(21) Anmeldenummer: 97105343.4
(22) Anmeldetag: 29.03.1997
(51) Int. Cl.: C08L 23/10

(54) **Verwendung von ataktischem Polypropylenen zur Verbesserung der Stabilität gegenüber ionisierender Strahlung**
Use of atactic polypropylene to improve stability against ionising radiation
Utilisation de polypropylène atactique pour améliorer la stabilité de radiation ionisante

(30) Priorität: 09.04.1996 AT 62196
(43) Veröffentlichungstag der Anmeldung: 15.10.1997
(73) Patentinhaber: Borealis GmbH, 2323 Schwechat-Mannswörth (AT)
(72) Erfinder: Wolfschwenger, Johannes, 4491 Niederneukirchen (AT); Gahleitner, Markus, Dipl.-Ing.Dr., 4501 Neuhofen/Krems (AT); Bernreitner, Klaus, Dipl.-Ing., 4020 Linz (AT); Haunschmid, Johann, 3511 Furth (AT); Hafner, Norbert, Dipl.-Ing.Dr., 4020 Linz (AT)
(74) Vertreter: Kunz, Ekkehard, Dr.

(56) Entgegenhaltungen:
- EP-A- 0 527 589
- EP-A- 0 632 062
- EP-A- 0 666 284

## Beschreibung

Die vorliegende Erfindung betrifft die Verwendung spezieller Polypropylene als Zusatzkomponenten bzw. Modifikatoren in Polypropylenzusammensetzungen zur Verbesserung der Stabilität gegenüber ionisierender Strahlung.
Polypropylen hat aufgrund seiner günstigen Kombination von Kosten und technologischen Eigenschaften in den vergangenen Jahrzehnten eine zunehmend breite Anwendung in verschiedensten Segmenten gefunden. Dies hat allerdings auch zu ständig steigenden Anforderungen an das Material und, in der Folge zu ständigen Verbesserungen und Erweiterungen des Eigenschaftsspektrums geführt. Dies ermöglichte auch den Einsatz von Polypropylenen im medizinisch / pharmazeutischen Bereich, wo sich der hohe Schmelzpunkt, welcher eine Heißdampf-Sterilisation bei 121°C problemlos ermöglicht, positiv auswirkt. Als negativ erweist sich hier allerdings die schlechte Eignung von Polypropylenen zur Sterilisation mittels ionisierender Strahlung, wie z.B. mittels β- oder y Strahlen, Röntgenstrahlen, etc, vor allem deshalb, da diese Methode zunehmende Bedeutung und Verbreitung findet.

Die Bestrahlung führt bei Polypropylen im Normalfall zu mehreren negativen Effekten: Molmassenabbau (Anstieg des Schmelzflußindex/MFI), Verfärbung bzw. Vergilbung und Versprödung. Der Grund dafür ist vor allem die Auslösung von Radikalreaktionen im Polymer durch die Strahlung, welche auch von üblichen Stabilisatorsystemen nicht mehr effektiv eingedämmt werden können. Es wurden daher in der Vergangenheit verschiedene Versuche unternommen, diese negativen Effekte durch spezielle Ausrüstung von Polypropylenen zu unterbinden. Dabei wurden den Polypropylenen beispielsweise gemäß US-PS 4,274,932 sogenannte "mobilizing agents", wie z.B. Kohlenwasserstoffe, halogenierte Kohlenwasserstoffe, Phthalsäureester, Polymerfette, Pflanzenöle bzw. Siliconöle zugesetzt. Diese Zusätze stellen jedoch vor allem deshalb einen entscheidenden Nachteil dar, da sie als Fremdsubstanzen die Eigenschaften der Polypropylene (PP) in nicht vorhersehbarer Weise verändern, zusätzlichen Aufwand und Kosten verursachen und insbesondere bei der Verwendung im medizinisch - pharmazeutischen sowie im Lebensmittelbereich vor allem durch Migration ein hygienisches Problem darstellen. Darüber hinaus können diese Substanzen die Wiederverwertbarkeit von PP stören bzw. die Deklaration als PP für Recyclingzwecke behindern.

EP-A-666284 beschreibt eine Mischung von amorphen Polypropylen und anderem Polypropylen. Obwohl die Möglichkeit eines Behandlung mit Strahlung offenbart ist, wird kein stabilisierenden Effekt gegenüber den mechanischen Eigenschaffen von isotaktischen Polypropylen nachgeweisen.

Die Aufgabe der vorliegenden Erfindung lag demnach in der Verminderung bzw Ausschaltung dieser Nachteile und vor allem darin, Polypropylene mit verbesserter Stabilität gegen ionisierende Strahlung bereitzustellen, ohne dabei allzu große Mengen an Fremdsubstanzen einsetzen zu müssen. Dieses Ziel konnte durch Zusatz von weitgehend amorphen Polypropylenen zu den üblicherweise verwendeten weitgehend isotaktischen Polypropylenen erreicht werden.

Gegenstand der Erfindung ist demnach die Verwendung eines hochgradig amorphen Polypropylens mit einer Schmelzenthalpie von höchstens 40 J/g und einem Schmelzflußindex von 0,1 bis 100 g/10 min, wobei das hochgradig amorphe Polypropylen ein Homopolymeres des Propylens oder ein Copolymeres des Propylens mit einem oder mehreren α-Olefinen und mit einem Propylenanteil von mindestens 80 Mol% ist, als Zusatzkomponente zu einem hochgradig isotaktischen Polypropylen mit einem isotaktischen Index von über 90% und einem Schmelzflußindex von 0,1 bis 100 g/10 min, wobei das hochgradig isotaktische Polypropylen ein Homopolymeres des Propylens oder ein Copolymeres des Propylens mit einem oder mehreren α-Olefinen und einem Propylenanteil von mindestens 50 Mol% ist, zur Verbesserung der Stabilität gegen ionisierende Strahlung, wobei das hochgradig amorphe Polypropylen und das hochgradig isotaktische Polypropylen in Mischung vorliegen.

Als hochgradig amorphe Polypropylene sind solche mit niedriger Schmelzenthalpie von höchstens 40 J/g, bevorzugt höchstens 30 J/g zu verstehen. Ihr kristalliner Anteil liegt bei höchstens etwa 10 Gew%, bevorzugt bei höchstens etwa 7 Gew%. Die Schmelzenthalpie (als Maß für die Kristallinität) wurde mittels Differential Scanning Calorimetrie (DSC) gemäß ISO 3146 bestimmt. Ausgewertet wurde der zweite Aufheizvorgang in einem Zyklus zwischen 10°C und 190°C mit Heiz- bzw. Kühlraten von 10K/min, wobei die Schmelzenthalpie (Hₘ) des für kristallines PP charakteristischen Peaks mit Maximum zwischen 140 und 170°C berechnet wurde. Die Messung des Schmelzflußindex (MFI, melt flow index) erfolgte gemäß ISO 1133/DIN 53735 bei 230°C/2,16 kg. Der MFI liegt bevorzugt bei 0,5 bis 50 g/10 min.

Die hochgradig amorphen Polypropylene sind entweder Homopolymere des Propylens oder Copolymere des Propylens mit einem oder mehreren α-Olefinen. Als Comonomere eignen sich bevorzugt α-Olefine mit 2 bzw. 4 - 10 C-Atomen, wie z.B. Ethylen, Buten, Penten, Hexen oder Decen. Besonders bevorzugt wird Ethylen als Comonomeres eingesetzt. Der Propylenanteil der Copolymeren liegt bei mindestens 80 Mol%, bevorzugt bei mindestens 85 Mol%. Die hochgradig amorphen Polypropylene (Modifikatoren) werden bevorzugt in einer Menge von 1 bis 60 Gew%, besonders bevorzugt von 2 bis 30 Gew.%, bezogen auf die gesamte Polypropylenmenge, den zu modifizierenden hochgradig isotaktischen Polypropylenen (Basispolymeren) zugesetzt.
Als hochgradig amorphe Polypropylene eignen sich beispielsweise die elastomeren Polypropylene vom Typ der Stereoblockpolymeren mit stereoregulärer Blockanordung in der Polymerkette, wie sie z.B. in US-PS 4,335.225 (Du Pont) oder EP-A 632.062 (PCD-Polymere) beschrieben sind. Sie zeichnen sich insbesondere durch niedrige Kristallinität, niedrigen isotaktischen Index sowie niedrigen E-Modul bzw. niedrige Oberflächenhärte aus.

Die hochgradig isotaktischen Polypropylene sind ebenfalls entweder Homopolymere oder Copolymere des Propylens. PP-Copolymere sind Copolymere des Propylens mit einem oder mehreren α-Olefinen. Die als Comonomere geeigneten α-Olefine sind bevorzugt Olefine mit 2 bzw. 4 - 10 C-Atomen, wie etwa Ethylen, Buten, Hexen oder Decen. Besonders bevorzugt wird Ethylen als Comonomeres verwendet. Der Anteil an Propylen in den entsprechenden Copolymeren liegt bei mindestens 50 Mol%, bevorzugt bei mindestens 70 Mol%. Copolymere können dabei sowohl Random-Copolymere als auch heterophasische Copolymere (Blockcopolymere) sein. Der isotaktische Index der hochgradig isotaktischen Polypropylene liegt bei über 90, bevorzugt bei über 95. Der isotaktische Index wurde mittels ¹³C-NMR, wie in Macromolecules 6(6)925-26 (1973) bzw. EP-B-wurde mittels ¹³C-NMR, wie in Macromolecules 6(6)925-26 (1973) bzw. EP-B-255.693 beschrieben, bestimmt. Der MFI liegt bevorzugt bei 0,5 bis 50g/10 min. Die Mischung enthält bevorzugt 1 bis 60 Gew%, besonders bevorzugt 2 bis 30 Gew% hochgradig amorphe Polypropylene, bezogen auf die gesamte Polypropylenmenge.

Ein weiterer Gegenstand der Erfindung ist ein Verfahren zur Verbesserung der Stabilität gegen ionisierende Strahlung eines hochgradig isotaktischen Polypropylens mit einem isotaktischen Index von über 90 % und einem Schmelzflußindex von 0,1 bis 100 g/10 min, wobei das hochgradig isotaktische Polypropylen ein Homopolymeres des Propylens oder ein Copolymeres des Propylens mit einem oder mehreren α-Olefinen und einem Propylenanteil von mindestens 50 Mol% ist, dadurch gekennzeichnet, daß dem hochgradig isotaktischen Polypropylen ein hochgradig amorphes Polypropylen mit einer Schmelzenthalpie von höchstens 40 J/g und einem Schmelzflußindex von 0,1 bis 100 g/10 min zugemischt wird, wobei das hochgradig amorphe Polypropylen ein Homopolymeres des Propylens oder ein Copolymeres des Propylens mit einem oder mehreren α-Olefinen und mit einem Propylenanteil von mindestens 80 Mol%ist. Dabei erfolgt die Herstellung der Mischung beispielsweise durch einfaches Mischen der in Pulver- oder Granulatform vorliegenden Polypropylene im gewünschten Gewichtsverhältnis in einem üblichen Mischer oder Kneter. Der Mischung können auch übliche Additive wie z.B. Verarbeitungshilfsmittel, Stabilisatoren, Gleitmittel, Antioxydantien, Nukleierungsmittel, Füllstoffe bzw. organische Peroxide zur Einstellung der Verarbeitbarkeit durch gezielte Degradation zugesetzt werden. Mögliche Stabilisatoren sind beispielsweise primäre (phenolische) und sekundäre (phosphitische) Antioxidantien, UV-Absorber und UV-Stabilisatoren vom "HALS"-Typ (sterisch gehinderte Amine), mögliche Nukleierungsmittel sind Talkum, Na-Benzoat, Sorbitolderivate und organische Phosphate. Die Temperaturen liegen dabei im Bereich von etwa 190 bis 300°C, bevorzugt bei 200 bis 250°C.

Anschließend können die erfindungsgemäß stabilisierten Polypropylenmischungen in bekannter Weise in die gewünschten Halbzeuge bzw. Fertigprodukte, beispielsweise in Granulate, Profile, Platten, Folien, Spritzguß- bzw. Extrusionsteile mit verbesserter Stabilität gegen ionisierende Strahlung weiterverarbeitet werden.

### Beispiele:

A) Als hochgradig isotaktisches Polypropylen wurde ein PP - Homopolymer mit einem MFI von 0,5 g/10 min und einem isotaktischen Index von 92, entsprechend einem kommerziell erhältlichen PP der Type Daplen® BE 50 von PCD-Polymere eingesetzt (Basispolymer 1). Außerdem wurde ein PP-Randomcopolymer mit 4 mol% Ethylen und einem MFI von 1,0 g/10 min (entsprechend Daplen^{R} CHC 1004) eingesetzt (Basispolymer 2).
B) Als hochgradig amorphes Polypropylen wurde ein elastomeres PP-Homopolymer (hergestellt gemäß Beispiel 1 der EP-A- 632.062), das wie folgt degradiert wurde, eingesetzt: Das gemäß Beispiel 1 der EP -A- 632.062 erhaltene elastomere Polypropylen (ELPP) wurde auf einer Brechmühle nach Abkühlung auf unter 0°C bis zu einer Korngröße von unter 3 mm gemahlen. Anschließend wurden 0,1 Gew.% Bis(1,1 dimethylethyl)peroxyisopropylbenzol (Perkadox 14 Sfl, Fa AKZO NOBEL), bezogen auf die Menge des Polymers, eingemischt, das Gemisch auf einem COLLIN-Zweischneckenextruder mit 25 mm Schneckendurchmesser bei 190-200°C aufgeschmolzen und mit einem Ausstoß von 2 kg/h über zwei Runddüsen zu Strängen von je 3 mm extrudiert. Die Verweilzeit im Extruder betrug etwa 30 s. Der Strang wurde nach Erstarrung im Wasserbad granuliert. In diesem Prozeß wurde das ELPP bis zu einem MFI von 6 g/10min degradiert (Modifikator 1). Der Zug-E-Modul lag bei 17 MPa, die Kristallinität entspricht einer Schmelzenthalpie von 19 J/g (bestimmt mittels DSC gemäß ISO 3146). Außerdem wurde ein ELPP-Random-Copolymer mit 6 mol% Ethylen (hergestellt analog zu Beispiel 1 der EP-A-632.062), das gleich wie Modifikator 1 degradiert wurde, eingesetzt (Modifikator 2). Der Modifikator 2 weist einen Zug-E-Modul von 8 Mpa und eine Kristallinität entsprechend einer Schmelzenthalpie von 10 J/g auf.
C) Folgende Stabilisatoren und Additive kamen zum Einsatz:
   * Hostanox 03, Fa. Hoechst AG
      (Bis[3,3-bis(4'-hydroxy-3 '-tert.butylphenyl)-butansäure]-glykolester) als primäres (phenolisches)Antioxidans
   * Ultranox 626, Fa. General Electric Co.
      (Bis(4,4-di-tert.butylphenyl)-pentaerythritol-diphosphit) als sekundäres (phosphitisches) Antioxidans
   * Chimassorb 944, Fa. Ciba-Geigy AG
      (Poly{[6-[(1,1,3,3-tetramethylbutyl)-imino]-1,3,5-triazin-2,4-diyl] [2-(2,2,6,6,-tetramethylpiperidyl)-amino -hexamethylen-[4-(2,2,6,6-tetramethylpiperidyl)-imino]}) als UV-Stabilisator vom "HALS"-Typ (sterisch gehindertes Amin)
   * Ölsäureamid (ÖSA, Fa. Croda) als Gleitmittel
   * Millad 3988, Fa. Milliken
      1,3:2,4-Bis(3,4-dimethylbenzyliden)-sorbitol als Nukleierungsmittel (heterogener Keimbildner)
   * Perkadox 14 Sfl, Fa.AKZO NOBEL
      Bis (1,1-dimethylethyl)peroxyisopropylbenzol als organisches Peroxid

### Beispiel 1:

95,82 Gew. Teile PP-Homopolymer entsprechend Daplen BE 50 (Basispolymer 1 gemäß (A)), 4 Gew. Teile degradiertes ELPP (Modifikator 1 gemäß (B)), 0,05 Gew. Teile Hostanox® und 0,05 Gew. Teile Ultranox® (Antioxydantien gemäß (C)) (sowie 0,082 Gew. Teile Perkadox® 14 (Peroxid zur Degradierung)) wurden in einem Intensivmischer gemischt und anschließend auf einem COLLIN-Zweischneckenextruder mit 25 mm Schneckendurchmesser bei 200-240°C aufgeschmolzen und mit einem Außstoß von 4 kg/h über zwei Runddüsen zu Strängen von je 3 mm extrudiert. Die Verweilzeit im Extruder betrug etwa 20 s. Der Strang wurde nach Erstarrung im Wasserbad granuliert. Der MFI (230°C/2,16 kg) des erhaltenen Granulats betrug 20 g/10 min.

Zur Bestimmung der mechanischen Eigenschaften wurden aus den Granulaten im Spritzguß (gemäß DIN 16774 (1988) bei einer Massetemperatur von 250°C und Formtemperatur von 30°C) Probekörper hergestellt, an denen im Zugversuch bei +23 °C am gespritzten Schulterstab F3/3 gemäß DIN 53455 (1981) die Zugfestigkeit bzw. Reißdehnung, bzw. gemäß DIN 53457 (1981) der Zug-E-Modul bestimmt wurden. Als Ausgangswert für die Stabilitätsuntersuchungen wurde jeweils ein Nullwert an unbestrahlten Probekörpern bestimmt.

Zur Untersuchung der Stabilität gegenüber ionisierender Strahlung wurden die Probekörper einer γ-Strahlung mit einer Dosis von 5 Mrad ausgesetzt und in der Folge gelagert. Die Lagerung erfolgte bei +50°C, um den Prozeß gegenüber Raumtemperatur noch zusätzlich zu beschleunigen. Der eingangs beschriebene Abbauprozeß wird nämlich durch die Strahlung zwar gestartet, es dauert in der Folge allerdings noch längere Zeit, bis negative Effekte deutlich erkennbar werden. Die Entnahmen aus der Lagerung (bei +50°C) und anschließenden Prüfungen (bei +23°C) erfolgten nach 3, 30, 60, 90 und 120 Tagen (also im Zeitraum von 4 Monaten).

Die Ergebnisse der Messungen sind in Tabelle 2 zusammengefaßt. Unter "rel" sind die Relativwerte der Zugfestigkeit, bezogen auf die Nullprüfung angeführt.

### Beispiele 2 bis 12 und Vergleichsbeispiele V1 bis V4:

Analog zu Beispiel 1 wurden Polymermischungen und Probekörper hergestellt, jedoch in der in Tabelle 1 angegebenen Zusammensetzung. Die Ergebnisse der Messungen, die analog zu Beispiel 1 erfolgten, sind in Tabelle 2 zusammengestellt. Der MFI (230°C/2,16 kg) der erhaltenen Granulate betrug jeweils 20g/10 min.

Beim Vergleich der Eigenschaftswerte gemäß Tabelle 2 zeigt sich, daß bereits das Beispiel 1 (nur Antioxidantien und 4% Modifikator) eine deutlich bessere Eigenschaftsentwicklung als die Vergleichsbeispiele V1 und V2 (letzteres sogar mit UV-Stabilisator!) aufweist. Die Restzugfestigkeit nach 4 Monaten liegt bei 82% gegenüber 67 bzw. 63%. Dieser Effekt wird auch vom Zusatz eines Nukleierungsmittels (Millad 3988, in den Beispielen 2 und 3) nicht gestört. Eine weitere Verbesserung der Eigenschaften wird schließlich mit noch höheren Modifikator - Konzentrationen (25 bzw. 50% in den Beispielen 4 und 5) erreicht.

Es zeigt sich außerdem, daß gegenüber dem Vergleichsbeispiel V3 (Homopolymer) sowohl durch Zusatz von Modifikator 1 (Beispiel 6) als auch Modifikator 2 (Beispiel 8) eine deutlich bessere Eigenschaftsentwicklung erreicht wird, daß eine Erhöhung der Modifikatorkonzentration (Beispiel 7) oder auch eine Kombination mit UV-Stabilisator (Beispiel 9) diesen Effekt verstärkt, daß auch gegenüber dem Vergleichsbeispiel V4 (Random-Copolymer) durch Modifikatorzusatz (Beispiele 10 und 11) Verbesserungen in der Strahlungsstabilität erreicht werden und daß auch hier der Effekt in Kombination mit UV-Stabilisierung und Nukleierung (Beispiel 12) noch stärker ausgeprägt ist.

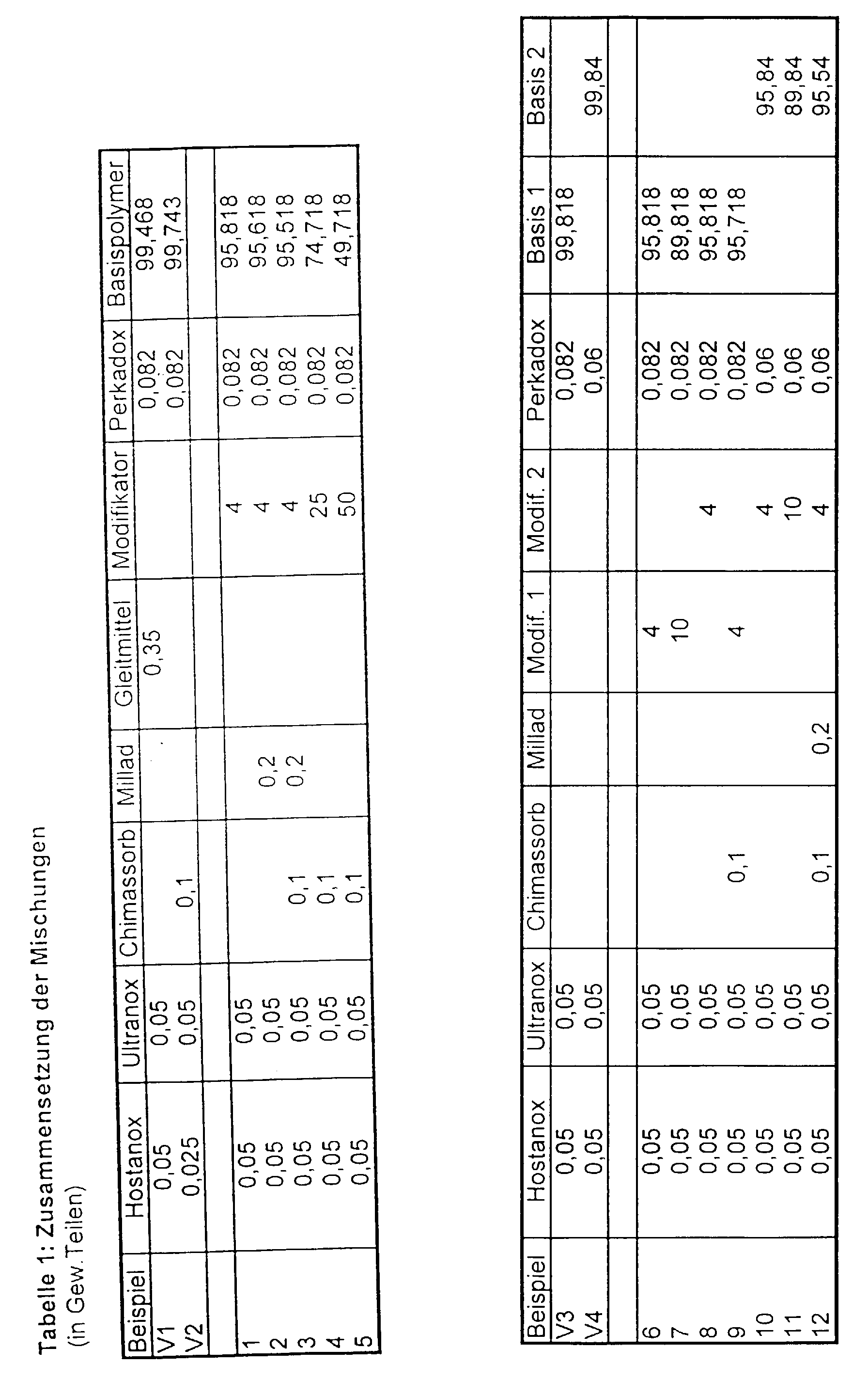

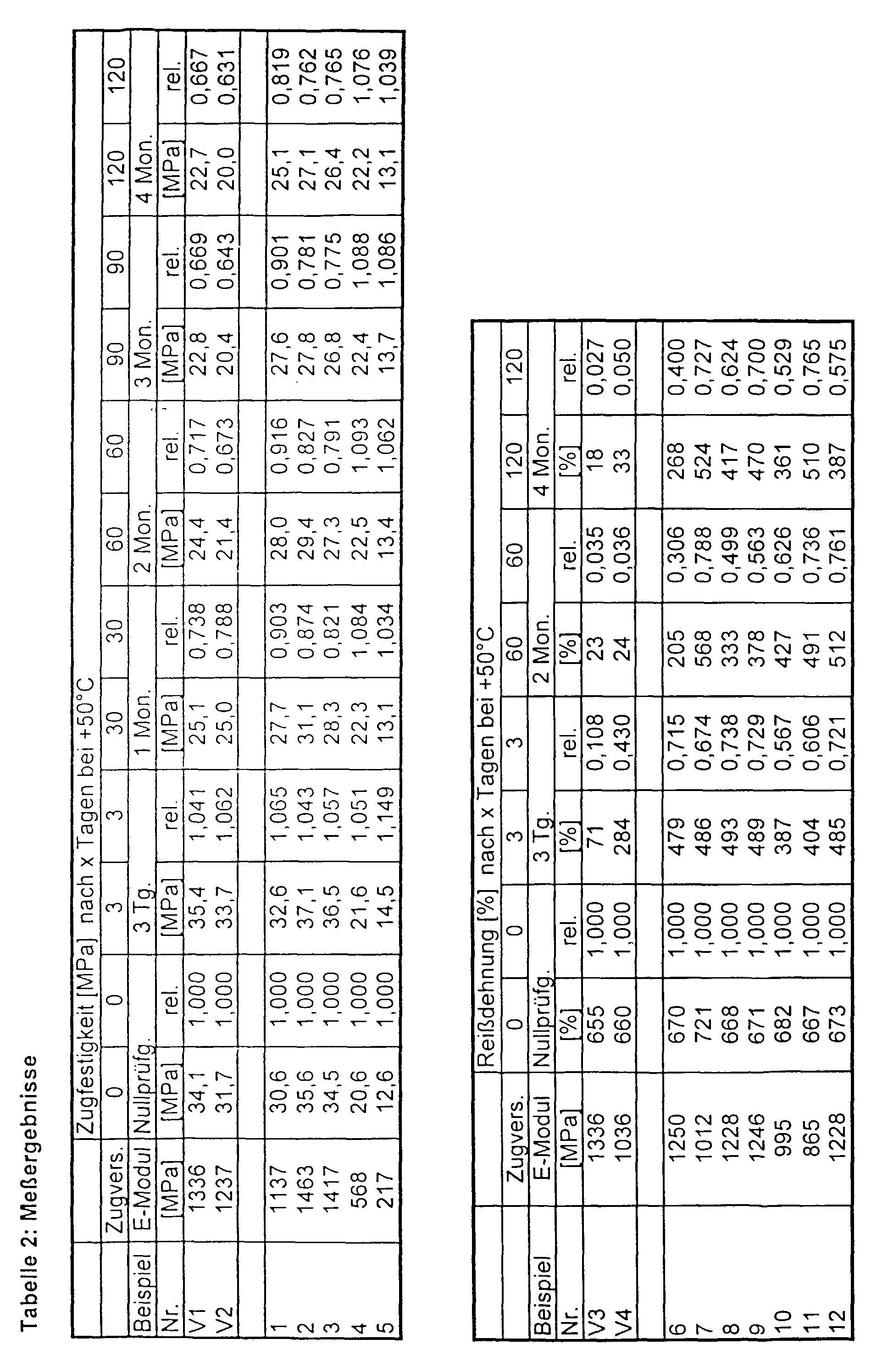

## Patentansprüche

1. Verwendung eines hochgradig amorphen Polypropylens mit einer Schmelzenthalpie von höchstens 40 J/g und einem Schmelzflußindex von 0,1 bis 100 g/10 min, wobei das hochgradig amorphe Polypropylen ein Homopolymeres des Propylens oder ein Copolymeres des Propylens mit einem oder mehreren α-Olefinen und mit einem Propylenanteil von mindestens 80 Mol% ist, als Zusatzkomponente zu einem hochgradig isotaktischen Polypropylen mit einem isotaktischen Index von über 90 % und einem Schmelzflußindex von 0,1 bis 100 g/10 min, wobei das hochgradig isotaktische Polypropylen ein Homopolymeres des Propylens oder ein Copolymeres des Propylens mit einem oder mehreren α-Olefinen und einem Propylenanteil von mindestens 50 Mol% ist, und das hochgradig amorphe Polypropylen und das hochgradig isotaktische Polypropylen in Mischung vorliegen, zur Verbesserung der Stabilität gegen ionisierende Strahlung.

2. Verwendung gemäß Anspruch 1, dadurch gekennzeichnet, daß das hochgradig amorphe Polypropylen eine Schmelzenthalpie von höchstens 30 J/g und einen Schmelzflußindex von 0,5 bis 50 g/10 min aufweist und ein Homopolymeres des Propylens oder ein Copolymeres des Propylens mit einem oder mehreren α-Olefinen und einem Propylenanteil von mindestens 85 % ist.

3. Verwendung gemäß Anspruch 1 oder 2, dadurch gekennzeichnet, daß das hochgradig isotaktische Polypropylen einen isotaktischen Index von über 95% und einen Schmelzflußindex von 0,5 bis 50 g/10 min aufweist und ein Homopolymeres des Propylens oder ein Copolymeres des Propylens mit einem oder mehreren α-Olefinen und einem Propylenanteil von mindestens 70 Mol% ist.

4. Verwendung gemäß einem der Ansprüche 1 bis 3, dadurch gekennzeichnet, daß als hochgradig isotaktisches Copolymeres des Propylens Random-Copolymere oder heterophasische Copolymere mit einem oder mehreren Comonomeren aus der Gruppe der C₂- und C₄- bis C₁₀-Olefine verwendet werden.

5. Verwendung gemäß Anspruch 4, dadurch gekennzeichnet, daß als Comonomer Ethylen verwendet wird.

6. Verwendung gemäß einem der Ansprüche 1 bis 5, dadurch gekennzeichnet, daß das hochgradig amorphe Polypropylen in einer Menge von 1 bis 60 Gew.%, bezogen auf die gesamte Polypropylenmenge, vorliegt.

7. Verwendung gemäß Anspruch 6, dadurch gekennzeichnet, daß das hochgradig amorphe Polypropylen in einer Menge von 2 bis 30 Gew.%, bezogen auf die gesamte Polypropylenmenge, vorliegt.

8. Verfahren zur Verbesserung der Stabilität gegen ionisierende Strahlung eines hochgradig isotaktischen Polypropylens mit einem isotaktischen Index von über 90 % und einem Schmelzflußindex von 0,1 bis 100 g/10 min, wobei das hochgradig isotaktische Polypropylen ein Homopolymeres des Propylens oder ein Copolymeres des Propylens mit einem oder mehreren α-Olefinen und einem Propylenanteil von mindestens 50 Mol% ist, dadurch gekennzeichnet, daß dem hochgradig isotaktischen Polypropylen ein hochgradig amorphes Polypropylen mit einer Schmelzenthalpie von höchstens 40 J/g und einem Schmelzflußindex von 0,1 bis 100 g/10 min zugemischt wird, wobei das hochgradig amorphe Polypropylen ein Homopolymeres des Propylens oder ein Copolymeres des Propylens mit einem oder mehreren α-Olefinen und mit einem Propylenanteil von mindestens 80 Mol%ist.

## Claims

1. Use of a highly amorphous polypropylene with an enthalpy of fusion not more than 40 J/g and with a melt flow index of from 0.1 to 100 g/10 min, where the highly amorphous polypropylene is a homopolymer of propylene or is a copolymer of propylene with one or more α-olefins and with a propylene content of at least 80 mol%, as a component added to a highly isotactic polypropylene with an isotactic index above 90% and with a melt flow index of from 0.1 to 100 g/10 min, where the highly isotactic polypropylene is a homopolymer of propylene or is a copolymer of propylene with one or more α-olefins and with a propylene content of at least 50 mol%, and the highly amorphous polypropylene and the highly isotactic polypropylene are present in a mixture, for improving resistance to ionizing radiation.

2. Use according to Claim 1, characterized in that the highly amorphous polypropylene has an enthalpy of fusion of not more than 30 J/g and has a melt flow index of from 0.5 to 50 g/10 min, and is a homopolymer of propylene or is a copolymer of propylene with one or more α-olefins and with a propylene content of at least 85%.

3. Use according to Claim 1 or 2, characterized in that the highly isotactic polypropylene has an isotacticity index above 95% and has a melt flow index of from 0.5 to 50 g/10 min, and is a homopolymer of propylene or is a copolymer of propylene with one or more α-olefins and with a propylene content of at least 70 mol%.

4. Use according to any of Claims 1 to 3, characterized in that random copolymers or heterophasic copolymers with one or more comonomers selected from the group consisting of C₂ olefins and C₄-C₁₀ olefins are used as highly isotactic copolymer of propylene.

5. Use according to Claim 4, characterized in that ethylene is used as comonomer.

6. Use according to any of Claims 1 to 5, characterized in that the amount present of the highly amorphous polypropylene is from 1 to 60% by weight, based on the total amount of polypropylene.

7. Use according to Claim 6, characterized in that the amount present of the highly amorphous polypropylene is from 2 to 30% by weight, based on the total amount of polypropylene.

8. Process for improving the resistance to ionizing radiation of a highly isotactic polypropylene with an isotacticity index of above 90% and with a melt flow index of from 0.1 to 100 g/10 min, where the highly isotactic polypropylene is a homopolymer of propylene or is a copolymer of propylene with one or more α-olefins and with a propylene content of at least 50 mol%, characterized in that a highly amorphous polypropylene with an enthalpy of fusion of at least 40 J/g and with a melt flow index of from 0.1 to 100 g/10 min is admixed with the highly isotactic polypropylene, where the highly amorphous polypropylene is a homopolymer of propylene or is a copolymer of propylene with one or more α-olefins and with a propylene content of at least 80 mol%.

## Revendications

1. Utilisation d'un polypropylène amorphe à un haut degré, présentant une enthalpie de fusion d'au maximum 40 J/g et un indice de fusion de 0,1 à 100 g/10 min, le polypropylène amorphe à un haut degré étant un homopolymère du propylène ou un copolymère du propylène avec une ou plusieurs oléfines α et avec une proportion en propylène d'au moins 80% en mole, comme composant d'addition à un polypropylène isotactique à un haut degré présentant un indice isotactique supérieur à 90% et un indice de fusion de 0,1 à 100 g/10 min, le polypropylène isotactique à un haut degré étant un homopolymère du propylène ou un copolymère du propylène avec une ou plusieurs oléfines α et avec une proportion en propylène d'au moins 50% en mole, le polypropylène amorphe à un haut degré et le polypropylène isotactique à un haut degré se trouvant sous forme de mélange, pour améliorer la stabilité au rayonnement ionisant.

2. Utilisation selon la revendication 1, caractérisée en ce que le polypropylène amorphe à un haut degré présente une enthalpie de fusion d'au maximum 30 J/g et un indice de fusion de 0,5 à 50 g/10 min et est un homopolymère du propylène ou un copolymère du propylène avec une ou plusieurs oléfines α et avec une proportion en propylène d'au moins 85%.

3. Utilisation selon la revendication 1 ou 2, caractérisée en ce que le polypropylène isotactique à un haut degré présente un indice isotactique supérieur à 95% et un indice de fusion de 0,5 à 50 g/10 min et est un homopolymère du propylène ou un copolymère du propylène avec une ou plusieurs oléfines α et présentant une proportion en propylène d'au moins 70% en mole.

4. Utilisation selon l'une quelconque des revendications 1 à 3, caractérisée en ce qu'on utilise comme copolymère du propylène isotactique à un haut degré des copolymères aléatoires ou des copolymères hétérophasés comprenant un ou plusieurs comonomères du groupe d'oléfines en C₂ et C₄ à C₁₀.

5. Utilisation selon la revendication 4, caractérisée en ce qu'on utilise de l'éthylène comme comonomère.

6. Utilisation selon l'une quelconque des revendications 1 à 5, caractérisée en ce que le polypropylène amorphe à un haut degré se trouve en une quantité de 1 à 60% en poids, par rapport à la quantité totale de polypropylène.

7. Utilisation selon la revendication 6, caractérisée en ce que le polypropylène isotactique à un haut degré se trouve en une quantité de 2 à 30% en poids, par rapport à la quantité totale de polypropylène.

8. Procédé pour l'amélioration de la stabilité au rayonnement ionisant d'un polypropylène isotactique à un haut degré, présentant un indice isotactique supérieur à 90% et un indice de fusion de 0,1 à 100 g/10 min, le polypropylène isotactique à un haut degré étant un homopolymère du propylène ou un copolymère du propylène avec une ou plusieurs oléfines a et avec une proportion en propylène d'au moins 50% en mole, caractérisé en ce qu'on mélange au polypropylène isotactique à un haut degré un polypropylène amorphe à un haut degré présentant une enthalpie de fusion d'au maximum 40 J/g et un indice de fusion de 0,1 à 100 g/10 min, le polypropylène amorphe à un haut degré étant un homopolymère du propylène ou un copolymère du propylène avec une ou plusieurs oléfines a et avec une proportion en propylène d'au moins 80% en mole.
